# EUROPÄISCHE PATENTSCHRIFT

(11) **EP 1 289 625 B1**
(45) Veröffentlichungstag und Bekanntmachung des Hinweises auf die Patenterteilung: **31.03.2004**
(21) Anmeldenummer: 01945270.5
(22) Anmeldetag: 08.06.2001
(51) Int. Cl.: B01D 53/14

(54) **VERFAHREN ZUM ENTSÄUERN EINES KOHLENWASSERSTOFF-FLUIDSTROMS**
METHOD FOR NEUTRALISING A STREAM OF HYDROCARBON FLUID
PROCEDE DE DESACIDIFICATION D'UN COURANT FLUIDIQUE D'HYDROCARBURE

(30) Priorität: 09.06.2000 DE 10028637
(43) Veröffentlichungstag der Anmeldung: 12.03.2003
(73) Patentinhaber: BASF AKTIENGESELLSCHAFT, 67056 Ludwigshafen (DE)
(72) Erfinder: WAGNER, Rupert, 67551 Worms (DE); HUGO, Randolf, 67246 Dirmstein (DE); SCHMID, Hans-Peter, 67227 Frankenthal (DE)
(74) Vertreter: Kinzebach, Werner, Dr.
(86) Internationale Anmeldenummer: PCT/EP2001/006503
(87) Internationale Veröffentlichungsnummer: WO 2001/093986

(56) Entgegenhaltungen:
- US-A- 4 336 233
- US-A- 4 537 753
- US-A- 5 820 837

## Beschreibung

Die vorliegende Erfindung betrifft ein Verfahren zum Entsäuern eines Kohlenwasserstoff-Fluidstroms, der Kohlendioxid (CO₂) und/oder weitere saure Gasen als Verunreinigungen enthält, bei dem man den Fluidstrom in einer Absorptions- bzw. Extraktionszone mit einer Absorptionsflüssigkeit in innigen Kontakt bringt, den weitgehend gereinigten Fluidstrom und die mit CO₂ und/oder weiteren sauren Gasen beladene Absorptionsflüssigkeit voneinander trennt, die Absorptionsflüssigkeit anschließend regeneriert und dann erneut der Absorptions- bzw. Extraktionszone zuführt.

In zahlreichen Prozessen in der chemischen Industrie treten Fluidströme auf, die Sauergase, wie z.B. CO₂, H₂S, SO₂, CS₂, HCN, COS oder Mercaptane als Verunreinigungen enthalten. Bei diesen Fluidströmen kann es sich beispielsweise um Gasströme (wie Erdgas, Synthesegas aus Schweröl oder schweren Rückständen, Raffineriegas oder bei der partiellen Oxidation von organischen Materialien, wie beispielsweise Kohle oder Erdöl, entstehende Reaktionsgase) oder um flüssige oder verflüssigten Kohlenwasserstoffströme (wie LPG (Liquified Petroleum Gas) oder NGL (Natural Gas Liquids)) handeln. Bevor diese Fluide transportiert oder weiterverarbeitet werden können, muß der Sauergasgehalt des Fluids deutlich reduziert werden. CO₂ muß beispielsweise aus Erdgas entfernt werden, da eine hohe Konzentration von CO₂ den Brennwert des Gases reduziert. Außerdem kann CO₂ in Verbindung mit in den Fluidströmen häufig mitgeführtem Wasser zu Korrosion an Leitungen und Armaturen führen.

Die Entfernung von Schwefelverbindungen aus diesen Fluidströmen ist aus unterschiedlichen Gründen von besonderer Bedeutung. Beispielsweise muß der Gehalt an Schwefelverbindungen von Erdgas durch geeignete Aufbereitungsmaßnahmen unmittelbar an der Erdgasquelle reduziert werden, denn auch die Schwefelverbindungen bilden in dem vom Erdgas häufig mitgeführten Wasser Säuren, die korrosiv wirken. Für den Transport des Erdgases in einer Pipeline müssen daher vorgegebene Grenzwerte der schwefelhaltigen Verunreinigungen eingehalten werden. Darüber hinaus sind zahlreiche Schwefelverbindungen bereits in niedrigen Konzentrationen übelriechend und, allen voran Schwefelwasserstoff (H₂S), toxisch.

Es wurden daher bereits zahlreiche Verfahren zum Entfernen von Sauergasbestandteilen aus Fluidströmen wie Kohlenwasserstoffgasen, LPG oder NGL entwickelt. Bei den am weitesten verbreiteten Verfahren wird das Sauergase enthaltende Fluidgemisch mit einem organischen Lösungsmittel oder einer wässrigen Lösung eines organischen Lösungsmittels in einer sogenannten Gaswäsche oder einer Flüssig/Flüssig-Extraktion in Kontakt gebracht.

Zu derartigen Waschverfahren und entsprechenden in diesen Verfahren eingesetzten Absorptionslösungen existiert auch eine umfangreiche Patentliteratur. Grundsätzlich kann man dabei zwei unterschiedlichen Typen von Absorptions- bzw. Lösungsmitteln unterscheiden:

Zum einen werden sog. physikalische Lösungsmittel eingesetzt, die auf einem physikalischen Absorptionsvorgang beruhen. Typische physikalische Lösungsmittel sind Cyclotetramethylensulfon (Sulfolan) und dessen Derivate, aliphatische Säureamide, NMP (N-Methylpyrrolidon) N-alkylierte Pyrrolidone und entsprechende Piperidone, Methanol und Gemische aus Dialkylethern von Polyethylenglykolen (Selexol®, Union Carbide, Danbury, Conn., USA).

Zum anderen werden chemische Lösungsmittel eingesetzt, deren Wirkungsweise auf chemischen Reaktionen beruht, bei denen die Sauergase in einfacher entfernbare Verbindungen umgewandelt werden. Beispielsweise werden bei den im industriellen Maßstab am häufigsten als chemische Lösungsmittel eingesetzten wässrigen Lösungen aus Alkanolaminen beim Durchleiten von Sauergasen Salze gebildet. Die Alkanolaminlösung kann durch Erhitzen oder Strippen regeneriert werden, wobei die Sauergassalze thermisch zersetzt und/oder mittels Dampf abgestrippt werden. Nach dem Regenerationsprozeß kann die Aminlösung wiederverwendet werden. Bevorzugte, beim Entfernen von Sauergasverunreinigungen aus Kohlenwasserstoffgasströmen verwendete Alkanolamine umfassen Monoethanolamin (MEA), Diethanolamin (DEA), Triethanolamin (TEA), Diisopropylamin (DIPA), Aminoethoxyethanol (AEE) und Methyldiethanolamin (MDEA).

Primäre und sekundäre Alkanolamine sind insbesondere für Gaswäschen geeignet, bei denen das gereinigte Gas einen sehr niedrigen CO₂-Gehalt aufweisen muß (z.B. 10 ppmᵥ CO₂). Die primären und sekundären Alkanolaminen reagieren direkt mit Kohlendioxid unter Bildung von löslichem Carbamat. In der wässrigen Aminlösung steht das Carbamat mit Bicarbonat in einem charakteristischen Gleichgewicht. Zum Regenerieren der Aminlösung wird im industriellen Einsatz häufig ein zweistufiger Regenerationsprozeß eingesetzt, wobei man das beladene Lösungsmittel zunächst in einer oder mehreren Flash-Kolonnen entspannt, so daß ein Teil des absorbierten CO₂ aus der Lösung verdampft. Restliches Kohlendioxid und/oder weitere absorbierte Sauergase werden anschließend durch Strippen mit Dampf entfernt. Lösungsmittel, die primäre und sekundäre Alkanolamine enthalten, erfordern jedoch zum Zersetzen des Carbamats eine große Menge an Dampf und entsprechend viel Wärmeenergie.

Aus der europäischen Patentanmeldung EP-A 0 322 924 ist bekannt, eine wässrige Aminlösung, die tertiäre Alkanolamine, insbesondere MDEA, enthält, zum Entsäuern von Gasströmen zu verwenden. Im Gegensatz zu primären und sekundären Alkanolaminen reagieren tertiäre Alkanolamine nicht direkt mit Kohlendioxid, da das Amin voll substituiert ist. Vielmehr wird Kohlendioxid in einer langsamen Reaktion mit dem tertiären Alkanolamin und mit Wasser zu Bicarbonat umgesetzt. Tertiäre Amine eignen sich daher insbesondere für eine selektive Entfernung von H₂S aus Gasgemischen, die H₂S und CO₂ enthalten. Wegen der langsamen Reaktion des Kohlendioxids muß der Waschprozeß mit tertiären Alkanolaminlösungen mit einem hohen Flüssigkeit/Gas-Verhältnis bei entsprechend hohem Lösungsmittelumlauf durchgeführt werden. Daher wurde versucht, die Absorptionsrate von Kohlendioxid in wässrigen Lösungen von tertiären Alkanolaminen durch Zugabe weiterer Verbindungen, die als Aktivatoren oder Promotoren bezeichnet werden, zu erhöhen (DE-A-15 42 415, DE-A-1 094 428, EP-A-0 160 203).

In dem US-Patent US 4,336,233 wird eine der derzeit wirksamsten Absorptionsflüssigkeiten zum Entfernen von CO₂ und H₂S aus einem Gasstrom beschrieben. Es handelt sich dabei um eine wässrige Lösung von Methyldiethanolamin (MDEA) und Piperazin als Absorptionsbeschleuniger oder Aktivator (aMDEA®, BASF AG, Ludwigshafen). Die dort beschriebene Absorptionsflüssigkeit enthält 1,5 bis 4,5 mol/l Methyldiethanolamin (MDEA) und 0,05 bis 0,8 mol/l, bevorzugt bis zu 0,4 mol/l Piperazin. Das Entfernen von CO₂ und H₂S unter Verwendung von MDEA wird ferner in den folgenden Patenten der Anmelderin detaillierter beschrieben: US 4,551,158; US 4,553,984; US 4,537,753; US 4,999,031; CA 1 291 321 und CA 1 295 810 (EP 202 600), EP-A-190 434 (CA 1,290,553), EP-A-159 495, EP-A-359 991 (US 4,999,031) und WO 00/00271.

Da keine direkte Bindung zwischen tertiären Alkanolaminen und Kohlendioxid entsteht, kann die Aminlösung sehr wirtschaftlich regeneriert werden. In vielen Fällen reicht dabei eine Flash-Regenerierung mit einer oder mehreren Entspannungsstufen aus. Eine optionale zusätzliche thermische Regenerierung erfordert wesentlich weniger Energie als im Falle von Lösungen aus primären oder sekundären Alkanolaminen.

Üblicherweise wird die beladene Absorptionsflüssigkeit von einem in der Absorptionskolonne herrschenden Druck von 10 - 100 bar in einer Niederdruckentspannungskammer oder -entspannungskolonne auf einen Druck von 1 - 2 bar entspannt. In US 4,336,233 und US 4,537,753 ist eine Variante dieses Verfahrens beschrieben, bei der die beladene Absorptionsflüssigkeit in einer ersten Entspannungsstufe auf einen Druck von 5 bar oder mehr und in einer zweiten Entspannungstufe auf einen Druck zwischen 1 und 3 bar entspannt wird. In diesem Fall wird die erste Entspannungsstufe als Mitteldruckentspannungsstufe (high-pressure flash) bezeichnet. Zwischen dem Sumpf der Absorptionskolonne und dem Einlaß der ersten Entspannungskammer kann noch eine Entspannungsturbine angeordnet sein. Auch in EP-A-0 107 783 wird ein mehrstufiger Entspannungsprozeß zur Regeneration der Absorptionsflüssigkeit beschrieben. In einer ersten Entspannungstufe wird die Absorptionsflüssigkeit auf einen Druck von mehr als 5 bar und in einer nachgeschalteten zweiten Stufe auf einen Druck zwischen 1 und 2 bar entspannt. Bei diesen Verfahren ist vor der Niederdruckentspannungsstufe, bzw., wenn eine Mitteldruckentspannungsstufe vorgesehen ist, zwischen der Mitteldruck- und Niederdruckentspannungsstufe ein Wärmetauscher zum Erwärmen der Absorptionsflüssigkeit angeordnet. Nachteilig bei diesen Verfahren ist, daß die vom Sumpf der Absorptionskolonne bzw. vom Sumpf der Mitteldruckentspannungsstufe kommende Absorptionsflüssigkeit eine relativ hohe Temperatur zwischen 80 und 100°C besitzt. Der Energieeintrag im Wärmetauscher erfolgt also auf einem relativ hohen Energieniveau.

Gemäß einem anderen in der Literatur beschriebenen Verfahren, wird die Absorptionsflüssigkeit in einem mehrstufigen Entspannungsprozeß regeneriert, wobei die letzte Entspannungsstufe bei vermindertem Druck gegenüber Atmosphärendruck, typischerweise bei einem Druck zwischen 0,5 und 0,8 bar (abs) betrieben wird (EP-A-0 121 109, EP-A-0 159 495, CA 1,295,810, CA 1,290,553). Auch dieses Verfahren hat ökonomische Nachteile, da im industriellen Einsatz hohe Verdichterleistungen der zur Vakuumerzeugung eingesetzten Pumpen erforderlich sind und der Betrieb der Pumpen einen weiteren Kostenfaktor darstellt.

Aufgabe der vorliegenden Erfindung ist es daher, ein verbessertes Verfahren zum Entsäuern eines Kohlenwasserstoff-Fluidstroms bereitzustellen, bei dem die Regeneration der Absorptionsflüssigkeit ökonomischer durchgeführt werden kann.

Gelöst wird diese Aufgabe durch das Verfahren gemäß Anspruch 1. Gegenstand der vorliegenden Erfindung ist daher ein Verfahren zum Entsäuern eines Kohlenwasserstoff-Fluidstroms, der CO₂ und/oder weitere saure Gase als Verunreinigungen enthält, bei dem man den Fluidstrom in einer Absorptions- bzw. Extraktionszone mit einer Absorptionsflüssigkeit in innigen Kontakt bringt, so daß CO₂ und andere im Fluidstrom enthaltene Sauergase von der Absorptionsflüssigkeit aufgenommen werden, den weitgehend gereinigten Fluidstrom und die mit CO₂ und/oder weiteren sauren Gasen beladene Absorptionsflüssigkeit voneinander trennt, die Absorptionsflüssigkeit anschließend regeneriert und dann erneut der Absorptions- bzw. Extraktionszone zuführt. Erfindungsgemäß wird die Absorptionsflüssigkeit dadurch regeneriert, daß man die beladene Absorptionsflüssigkeit in einer ersten Niederdruckentspannungsstufe auf einen Druck von 1 bis 2 bar (abs) entspannt, so daß ein Teil der in der Absorptionsflüssigkeit enthaltenen Gase abdampfen kann, anschließend die teilregenerierte Absorptionsflüssigkeit erwärmt und dann in einer zweiten Niederdruckentspannungsstufe erneut auf einen Druck von 1 bis 2 bar (abs) entspannt.

Erfindungsgemäß wird also vorgeschlagen, die Absorptionsflüssigkeit in zwei separaten Entspannungsschritten jeweils auf einen Druck entspannt, der nur geringfügig über Atmosphärendruck liegt und bevorzugt 1,1 bis 1,5 bar (abs) beträgt. Besonders vorteilhaft ist der Druck in beiden Niederdruckentspannungsstufen im wesentlichen gleich. Zwischen der ersten und zweiten Niederdrukkentspannungsstufe erwärmt man die Absorptionsflüssigkeit, um den in der ersten Entspannungsstufe auftretenden Energieverlust wenigstens teilweise zu kompensieren. Da bereits in ersten Niederdruckentspannungsstufe eine Entspannung auf einen Druck von 1 bis 2 bar erfolgt, ist die Absorptionsflüssigkeit vor der Erwärmung kühler als bei den aus dem Stand der Technik bekannten Verfahren. Typischerweise erfolgt die Erwärmung in einem Wärmetauscher bei einer Eintrittstemperatur der Absorptionsflüssigkeit von 60 bis 85 °C. Die Wärmeenergie wird folglich auf einem tieferen Energieniveau zugeführt, was zu einem besseren Gesamtwirkungsgrad führt. Bei bisher bekannten Verfahren, bei denen die Absorptionsflüssigkeit vor dem Eintritt in die Niederdruckentspannungsstufe erwärmt wird, ist eine Aufheizung des gesamten Massenstroms erforderlich, also der Absorptionsflüssigkeit und praktisch des gesamten absorbierten Sauergases. Im Gegensatz dazu muß bei dem erfindungsgemäßen Verfahren das in der ersten Niederdruckentspannungsstufe bereits freigesetzte Sauergas nicht mehr erwärmt werden.

Vorteilhaft werden für die Entspannung Entspannungsbehälter oder -kammern verwendet, die auch als Kolonnen gestaltet sein können. Die Entspannungsbehälter können frei von besonderen Einbauten sein. Es können jedoch auch mit Einbauten, z.B. mit Füllkörpern ausgestattete Kolonnen verwendet werden. Bei Verwendung einer Entspannungskolonne wird die teilregenerierte Absorptionsflüssigkeit am Sumpf der ersten Kolonne abgezogen und in den Wärmetauscher geleitet. Die erwärmte Absorptionsflüssigkeit wird dann in den Kopfbereich, vorzugsweise in das obere Drittel der Entspannungskolonne der zweiten Entspannungskolonne geleitet. Vom Sumpf der zweiten Entspannungskolonne wird die regenerierte Absorptionsflüssigkeit zurück in den Kopf der Absorptionskolonne geführt. Vor Eintritt in die Absorptionskolonne kann ein zusätzlicher Wärmetauscher angeordnet sein, der eine Abkühlung der Absorptionsflüssigkeit bewirkt, um die Beladbarkeit mit Sauergasen im anschließenden Waschprozess zu erhöhen.

Die Erwärmung der nach Durchlaufen der ersten Niederdruckentspannungsstufe teilregenerierten Absorptionsflüssigkeit und die Entspannung in der zweiten Niederdruckentspannungsstufe kann auch durch eine Entspannungseinrichtung und einen separaten Wärmetauscher realisiert werden. Erwärmung und zweite Entspannung können jedoch auch in einer integrierten Einrichtung, beispielsweise in einem Wärmetauscher mit Entgasung durchgeführt werden. Besonders bevorzugt verwendet man einen liegenden Wärmetauscher, in welchem die Erwärmung der Absorptionsflüssigkeit und die Freisetzung der Sauergase im zweiten Entspannungsprozess gleichzeitig erfolgen können, beispielsweise einen liegenden Thermosyphon. Die Ablauftemperatur der Absorptionsflüssigkeit liegt dann vorteilhaft unterhalb der Siedetemperatur der niedrigstsiedenden Komponente der unbeladenen Absorptionsflüssigkeit bei gegebenem Betriebsdruck.

Das in den beiden Entspannungsstufen freigesetzte Gas besteht hauptsächlich aus CO₂. Mitgerissenes Wasser und Reste von Aminenkönnen über Rücklauf-Kondensatoren in den Kreislauf des Absorptionsmittels bzw. in die Absorptionskolonne zurückgeführt werden. Die am Kopf der ersten und zweiten Niederdruckentspannungsstufe abgezogenen Gase werden daher vorteilhaft über Kondensatoren, beispielsweise Rücklauf-Kondensatoren, geleitet. Dabei kann jeder Niederdruckentspannungsstufe ein separater Rücklauf-Kondensator zugeordnet sein. Bevorzugt zieht man jedoch die in der ersten und zweiten Entspannungsstufe freigesetzten Gase über einen gemeinsamen Kondensator ab.

Verwendet man einen Wärmetauscher mit Entgasung in der zweiten Entspannungsstufe, kann das freigesetzte Gas auch in den Sumpf der ersten Entspannungsstufe zurückgeleitet werden.

Das über die Kondensatoren abgezogene Gas besteht, nach gegebenenfalls durchgeführter Adsorption von restlichen Aminspuren aus hochreinem CO₂ in Lebensmittelqualität, das entsprechend weiterverarbeitet werden kann.

Gemäß einer Variante des erfindungsgemäßen Verfahrens kann der ersten Niederdruckentspannungsstufe wenigstens eine Mitteldrukkentspannungsstufe (high-pressure flash) vorgeschaltet sein, in der die aus dem Absorbersumpf abgezogene, beladene Absorptionsflüssigkeit zunächst auf einen Druck von größer gleich 3 bar (abs), typischerweise 5 bis 8 bar (abs) entspannt wird.

Ein besonderer Vorteil des erfindungsgemäßen Verfahrens besteht darin, daß CO₂ und auch ein größerer Teil anderer Sauergase, wie H₂S, mit den beiden erfindungsgemäß vorgeschlagenen Niederdrukkentspannungsstufen in ausreichendem Maße aus der Absorptionsflüssigkeit entfernt werden kann, so daß die Absorptionsflüssigkeit ohne weitere thermische Behandlung, also etwa ohne zusätzliche Abstreifer (Strippkolonnen) regeneriert wird. Je nach Verunreinigung des behandelten Kohlenwasserstoff-Fluidstroms mit weiteren Sauergasen kann es jedoch vorteilhaft sein, die Absorptionsflüssigkeit nach dem Entspannen mit Hilfe eines Ausstreifers zu regenerieren. Beispielsweise kann man weitere in der Absorptionsflüssigkeit enthaltene Sauergase wie H₂S oder COS, sowie Reste von CO₂ durch Strippen mit Wasserdampf oder Stickstoff entfernen.

Das erfindungsgemäße Verfahren kann mit unterschiedlichsten Absorptionsflüssigkeiten durchgeführt werden, wobei wässrige Aminlösungen, die mindestens ein Amin enthalten, als Absorptionsflüssigkeit bevorzugt sind. Besonders bevorzugt verwendet man Alkanolamine, wie Monoethanolamin, Diethanolamin,'Triethanolamin, Diisopropanolamin, Aminoethoxyethanol etc. Ganz besonders bevorzugt enthält die Absorptionsflüssigkeit Methyldiethanolamin (MDEA), Dimethylethanolamin oder Piperazin, als Einzelkomponenten oder als Gemisch aus zwei oder drei dieser Komponenten.

Im Allgemeinen verwendet man 1,5 bis 6 Mol Amin pro 1 Absorptionsflüssigkeit, vorzugsweise 2 bis 5 Mol/l und insbesondere 3,0 bis 4,5 Mol/l.

Bei Verwendung eines tertiären Amins kann ein Aktivator, insbesondere Piperazin oder ein Derivat davon, verwendet werden. Der Aktivator wird im Allgemeinen in einer Menge von 0,05 bis 3 Mol, insbesondere 0,1 bis 2 Mol, pro 1 Absorptionsflüssigkeit verwendet.

Besonders bevorzugt verwendet man Methyldiethanolamin zusammen mit Piperazin. Die Menge an Methyldiethanolamin liegt dabei im Bereich von 30 bis 70 Gew.-%, insbesondere 35 bis 60 bzw. 40 bis 60 Gew.-% und besonders bevorzugt 45 bis 55 Gew.-%, bezogen auf das Gewicht der Absorptionsflüssigkeit. Die Menge an Piperazin ist so, dass das Gewichtsverhältnis von Methyldiethanolamin zu Piperazin im Bereich von 9 bis 15, vorzugsweise 11 bis 15, liegt.

Die vorliegende Erfindung wird im folgenden anhand eines in den beigefügten Zeichnungen dargestellten Ausführungsbeispiels ausführlicher beschrieben. Das Ausführungsbeispiel bezieht sich auf eine Gaswäsche. Die Regeneration von bei der Flüssig/Flüssigextraktion (etwa bei einer LPG-Wäsche) verwendeten Absorptionsflüssigkeit, läuft jedoch entsprechend ab.

In den Zeichnungen zeigt:
- Fig. 1: eine schematische Darstellung des Verfahrensablaufs einer bevorzugten Ausführungsform der erfindungsgemäßen Gaswäsche;
- Fig. 2: einen Ausschnitt einer Variante des Verfahrens der Fig. 1;
- Fig. 3: eine zweite bevorzugte Ausführungsform des erfindungsgemäßen Verfahrens;
- Fig. 4: einen Ausschnitt einer Variante des Verfahrens der Fig. 3;
- Fig. 5: eine schematische Darstellung eines nach dem Thermosyphonprinzip arbeitenden Wärmetauschers; und
- Fig. 6: eine schematische Darstellung des Verfahrensablaufs einer Gaswäsche gemäß Stand der Technik.

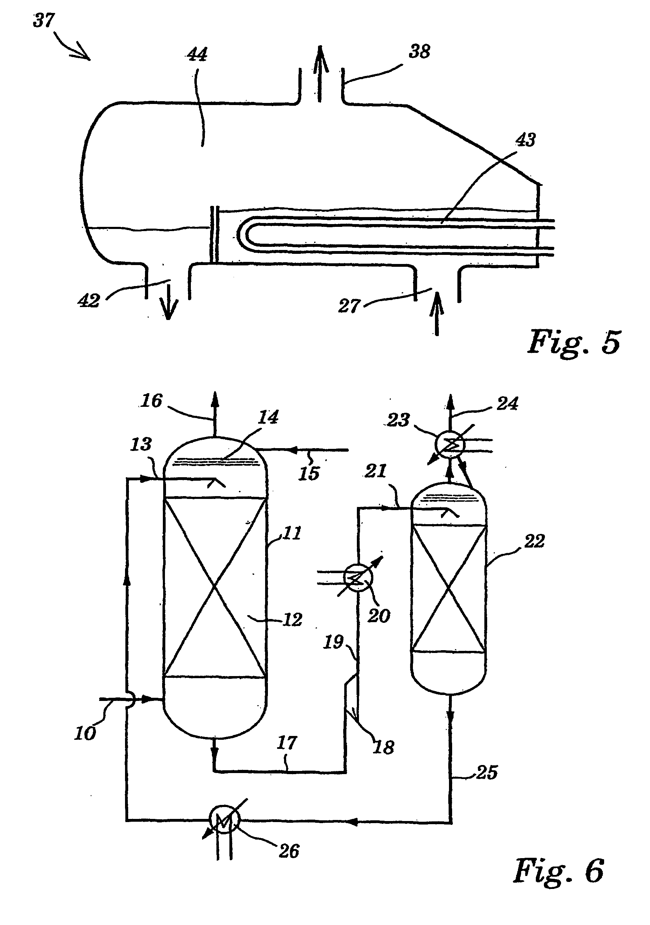

Zunächst wird unter Bezugnahme auf Fig. 6 der prinzipielle Verfahrensablauf einer Gaswäsche gemäß Stand der Technik erläutert. Ein Fluidgemisch, welches beispielsweise Erdgas als Wertprodukt enthalten kann, und darüber hinaus CO₂ und gegebenenfalls weitere Sauergase wie H₂S oder COS enthält, wird über eine Zuleitung 10 in eine Absorptionskolonne 11 geleitet. Vor dem Eintritt in die Absorptionskolonne können (nicht dargestellte) Trenneinrichtungen vorgesehen sein, welche beispielsweise Flüssigkeitströpfchen aus dem Rohgas entfernen. Die Absorptionskolonne 11 besitzt eine Absorptionszone 12, in welcher ein inniger Kontakt des sauren Rohgases mit einer an Sauergasen armen Absorptionsflüssigkeit gewährleistet wird, die über eine Zuleitung 13 in den Kopfbereich der Absorptionskolonne 11 gelangt und im Gegenstrom zu dem zu behandelnden Gas geführt wird. Die Absorptionszone 12 kann beispielsweise durch Böden, etwa Sieb- oder Glockenböden, oder durch Packungen realisiert werden. Typischerweise werden 20 bis 34 Böden verwendet. Im Kopfbereich der Absorptionskolonne 11 können 1 bis 5 Rückwaschböden 14 angeordnet sein, um den Verlust an leicht flüchtigen Bestandteilen der Absorptionsflüssigkeit zu verringern. Die beispielsweise als Glockenböden ausgebildeten Rückwaschböden 14 werden über eine Kondensatleitung 15 mit Wasser gespeist, durch welches das behandelte Gas geleitet wird. Der von Sauergasbestandteilen weitgehend befreite Gasstrom verläßt die Absorptionskolonne 11 über einen Kopfabzug 16. In der Leitung 16 kann - insbesondere wenn in der Kolonne 11 keine Rückwaschböden vorgesehen sind - ein (nicht-dargestellter) Abscheider angeordnet sein, welcher mitgerissene Absorptionsflüssigkeit aus dem Gasstrom entfernt.

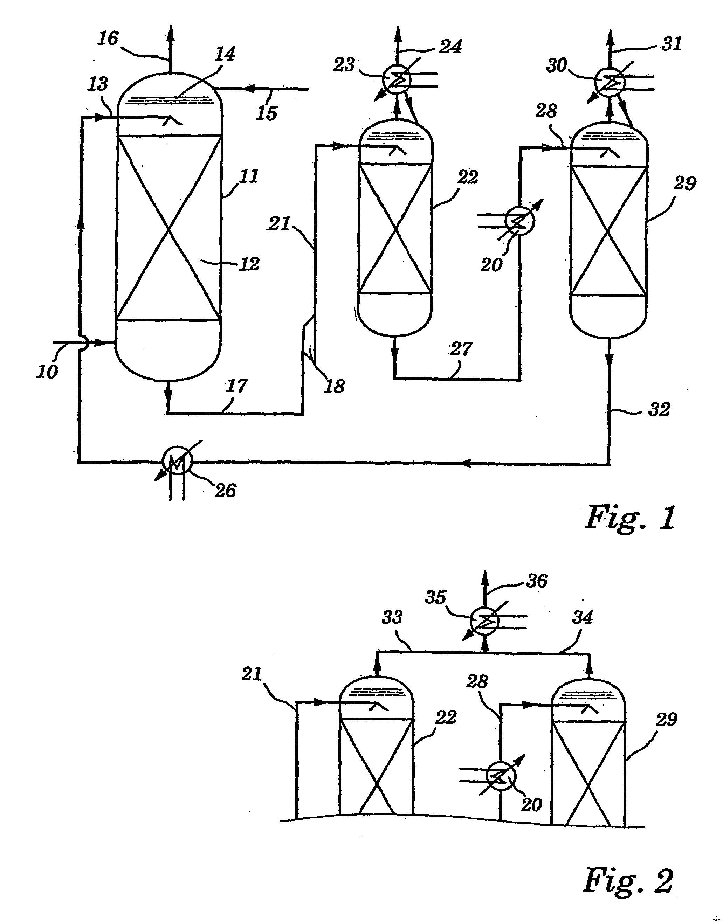

Anstelle der hier beschriebenen einstufigen Absorptionseinrichtung kann auch eine zweistufige Variante verwendet werden, wie sie beispielsweise in Fig. 2 des US-Patentes 4,336,233 dargestellt ist.

In der Absorptionskolonne herrscht typischerweise ein Druck zwischen 1 und 120 bar (abs), bevorzugt zwischen 10 und 100 bar. Die Absorptionsflüssigkeit wird mit einer Temperatur von 40 bis 70°C in den Kolonnenkopf geleitet und mit 50 bis 100°C am Kolonnensumpf entnommen.

Die sauergashaltige Absorptionsflüssigkeit verläßt die Absorptionskolonne 11 über eine Leitung 17 und gelangt über eine optional vorgesehene Entspannungsturbine 18 und eine Leitung 19 in einen Wärmetauscher 20, in welchem die Absorptionsflüssigkeit um 5 bis 30 °C erwärmt wird. Zwischen der Absorptionskolonne 11 und dem Wärmetauscher 20 bzw. zwischen der Entspannungsturbine 18 und dem Wärmetauscher 20 können eine oder mehrere (hier nicht dargestellte) Mitteldruckentspannungskolonnen angeordnet sein, in denen die Absorptionsflüssigkeit von einem höheren Druck auf einen niedrigeren Druck von typischerweise mehr als 3 bar (abs) entspannt wird. Die Mitteldruckentspannungskolonnen dienen in erster Linie nicht der Regeneration der Absorptionsflüssigkeit, sondern einer höheren Reinheit des Sauergases, die über eine vorgeschaltete Freisetzung von Inertgasen in den Mitteldruckentspannungskolonnen erreicht wird. Ein Beispiel einer Gaswäsche, bei welcher die Absorptionsflüssigkeit in einer Mitteldruckentspannungskolonne und einer nachgeschalteten Niederdruckentspannungskolonne regeneriert wird, ist beispielsweise in US 4,537,753 beschrieben.

Die beladene Absorptionsflüssigkeit wird über eine Leitung 21 in den Kopfbereich einer Entspannungskolonne 22 geführt. Im dargestellten Beispiel ist am Kopf der Entspannungskolonne 22 ein Wärmetauscher mit Kopfverteiler oder Kondensator 23 vorgesehen, der mitgerissene Tröpfchen der Absorptionsflüssigkeit in die Entspannungskolonne zurückführt. Über die Leitung 24 wird freigesetztes saures Gas abgezogen, das, gegebenenfalls nach Entfernung restlicher Aminspuren, als hochreines Gas vorliegt und beispielsweise bei Fehlen schwefelhaltiger Komponenten in der Lebensmittelindustrie als rein-CO₂ (food grade) eingesetzt werden kann. Die regenerierte Absorptionsflüssigkeit verläßt die Entspannungskolonne 22 über eine Leitung 25 und wird über eine (nicht dargestellte) Pumpe und einen gegebenenfalls zur Kühlung der Absorptionsflüssigkeit vorgesehene Wärmetauscher 26 über die Leitung 13 in den Kopfbereich der Absorptionskolonne 11 zurückgeführt. Zwischen der Entspannungskolonne 22 und der Absorptionskolonne 11 können noch eine oder mehrere (hier nicht dargestellte) Ausstreifer (Strippkolonnen) angeordnet sein, in welchen die Absorptionsflüssigkeit im Gegenstrom zu einem Gasstrom, beispielsweise Wasserdampf oder Stickstoff, geführt wird, um restliche Sauergasbestandteile aus der Absorptionsflüssigkeit zu entfernen.

Bezugnehmend auf Fig. 1 wird nun der Verfahrensablauf einer ersten Variante des erfindungsgemäßen Gaswäscheverfahrens näher erläutert. Die eigentliche Gaswäsche entspricht dem an sich bekannten, bereits im Zusammenhang mit Fig. 6 erläuterten Verfahren, wobei in Fig. 1 Elemente, die den bereits in Fig. 6 erläuterten Elementen entsprechen, mit denselben Bezugsziffern versehen sind. Sauergashaltiges Rohgas wird wiederum über eine Leitung 10 in die Absorptionskolonne 11 geleitet, wo es mit einer Absorptionsflüssigkeit in innigen Kontakt gebracht wird. Die Absorptionsflüssigkeit wird über die Leitung 17 im Sumpf der Absorptionskolonne 11 abgezogen und über eine optional vorhandene Entspannungsturbine 18 in den Kopfbereich einer ersten Niederdruckentspannungskolonne 22 geleitet. In der Entspannungskolonne 22 wird die Absorptionsflüssigkeit auf einen Druck entspannt, der im wesentlichen Atmosphärendruck entspricht oder nur leicht, etwa 1 bar, darüber liegt. Die Absorptionsflüssigkeit wird vor dem Eintritt in die erste Absorptionskolonne nicht erwärmt. Die beim Entspannungsvorgang freigesetzten Gase, insbesondere CO₂, werden über den Kondensator 23 und die Leitung 24 aus dem Kopfbereich der Kolonne abgezogen. Die teilregenerierte Absorptionsflüssigkeit gelangt über eine Leitung 27 in einen Wärmetauscher 20 und wird dort erwärmt, bevor sie über eine Leitung 28 in den Kopfbereich einer zweiten Niederdruckentspannungskolonne 29 strömt. In der zweiten Kolonne 29 wird die Absorptionsflüssigkeit wiederum auf einen Druck zwischen 1 und 2 bar (abs) entspannt, wobei weitere Gasanteile aus der Absorptionsflüssigkeit abdampfen können. Das Gas wird wiederum nach Durchlaufen eines Rückfluß-Kondensators 30 über eine Leitung 31 aus dem Kopfbereich der Kolonne 29 abgezogen. Die regenerierte Absorptionsflüssigkeit gelangt über eine Leitung 32 und einen gegebenenfalls vorgesehenen Wärmetauscher 26 über die Leitung 13 zurück in den Kopfbereich der Absorptionskolonne 11. Durch den Wärmetauscher 26 kann die Temperatur der Absorptionsflüssigkeit vor Eintritt in die Absorptionskolonne 11 erniedrigt werden.

Fig. 2 zeigt eine Variante des in Fig. 1 dargestellten Verfahrens. Anstelle der in Fig. 1 für jede Entspannungskolonne 22,29 vorgesehenen Rückfluß-Kondensatoren 23,30 werden die aus den Kopfbereichen der Kolonnen 22,29 abgezogenen Gase über Leitungen 33,34 zu einem gemeinsamen Rückfluß-Kondensator 35 geführt, aus dem sie über eine Leitung 36 abgeführt werden.

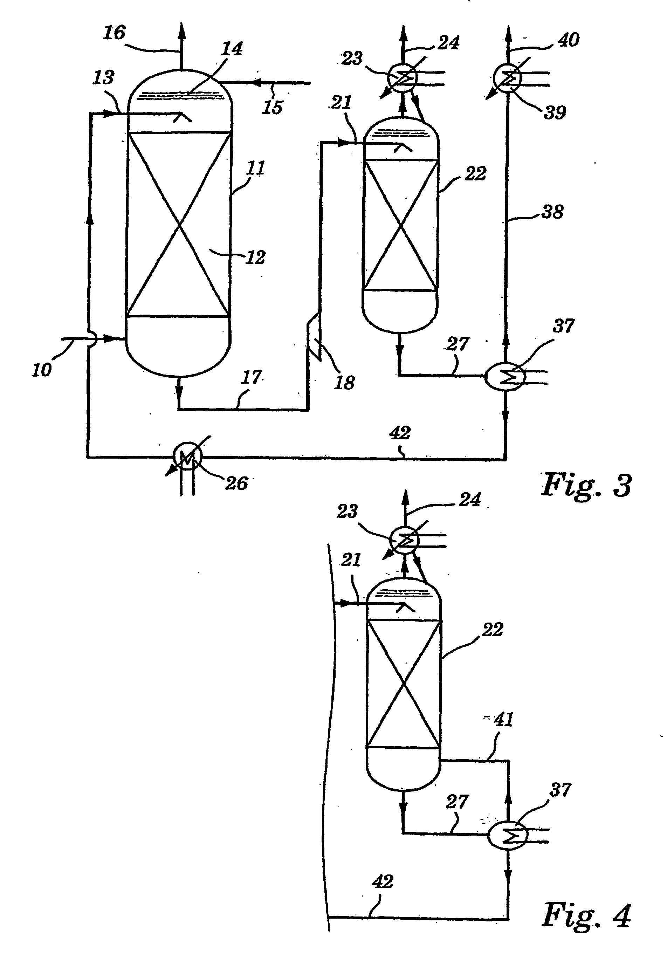

Die Figuren 3 und 4 zeigen eine weitere Ausführungsform des erfindungsgemäßen Verfahrens, bei welcher die Erwärmung der Absorptionsflüssigkeit und die zweite Entspannungsstufe durch einen Wärmetauscher mit Entgasung 37 realisiert werden. Darin wird die Absorptionsflüssigkeit einerseits erwärmt und andererseits Sauergas freigesetzt. Die dabei freigesetzten Gase werden in der Variante der Fig. 3 über eine Leitung 38 in einen Rückfluß-Kondensator 39 geleitet und von dort über eine Leitung 40 abgezogen. Gemäß der Variante der Fig. 4 werden die im Wärmetauscher 37 freigesetzten Gase über eine Leitung 41 in den Sumpfbereich der ersten Entspannungskolonne 22 zurückgeleitet. In beiden Fällen gelangt die regenerierte Absorptionsflüssigkeit über die Leitung 42 und einen gegebenenfalls vorgesehenen Wärmetauscher 26, sowie die Leitung 13 in der Kopfbereich der Absorptionskolonne 11 zurück.

Als Wärmetauscher mit Entgasung 37 wird in den Verfahrensvarianten der Fig. 3 und 4 bevorzugt ein liegender Thermosyphon verwendet, wie er in Fig. 5 detaillierter dargestellt ist (für bereits in den Fig. 3 und 4 beschriebene Elemente wurden wieder dieselben Bezugsziffern verwendet). Die teilregenerierte Absorptionsflüssigkeit gelangt über die Leitung 27 in den Wärmetauscher 37, wo sie mit einem U-förmigen, von einem Wärmetauschmedium durchflossenen Rohr 43 in Kontakt gebracht und teilweise verdampft wird. Im Raum 44 des Wärmetauschers 37 entsteht so ein Flüssigkeit/ Dampf-Gemisch. Das freigesetzte CO₂ und restliche Sauergasbestandteile werden über die Leitung 38 abgezogen, während die regenerierte Absorptionsflüssigkeit den Wärmetauscher 37 über Leitung 42 verläßt.

### Beispiel

Ein Einsatzgas bestehend aus 19 %(v/v) CO₂, 1 % (v/v) Stickstoff, 70 % (v/v) Methan und 10 % (v/v) Ethan soll durch eine Aminwäsche soweit gereinigt werden, daß der Restgehalt an CO₂ im gereinigten Gas bei 2,5 % (v/v) liegt.

Es wird eine Aminwäsche unter Verwendung einer mit Piperazin aktivierten 40%igen wässrigen MDEA-Lösung als Absorptionsflüssigkeit durchgeführt.

In einem Vergleichsbeispiel wird die Regenerierung der Absorptionsflüssigkeit in einem verfahren gemäß Fig. 6 (ohne Entspannungsturbine) mit Hilfe eines Wärmetauschers (Reichlaugenerhitzer) einer Niederdruckentspannungskolonne mit Rückflußkühler (low pressure flash) sowie eines Kühlers für die regenerierte Absorptionsflüssigkeit durchgeführt.

Das erfindungsgemäße Verfahren mit zwei Niederdruckentspannungsstufen wird sowohl gemäß der Variante der Fig. 1 als auch der Variante der Fig. 3 durchgeführt, wobei jeweils keine Entspannungsturbinen vorgesehen sind.

### Versuche mit fester Umlaufmenge an Absorptionsflüssigkeit:

Bei der Variante der Fig. 1 ist der Energieeintrag um 6,4% niedriger als bei der Verfahrensvariante des Standes der Technik gemäß Fig. 6. Im Fall des erfindungsgemäßen Verfahrens gemäß Fig. 4, bei welchem das im Wärmetauscher 37 freigesetzte Gas in den Sumpf der ersten Entspannungskolonne zurückgeführt wird, beträgt die Energieeinsparung sogar 13,5%.

Bei Verwendung von getrennten Rücklauf-Kondensatoren gewinnt mit dem erfindungsgemäßen Verfahren 36% hochreines CO₂ in Lebensmittelqualität-

### Verfahrensführung mit festem Energieeintrag:

Wenn die durch den Wärmetauscher 20 eingetragene Energie bei allen Verfahrensvarianten gleich groß ist, stellt man fest, daß zum Erreichen der geforderten Spezifikation von 2,5% Rest-CO₂ beim Verfahren des Standes der Technik eine um 4,4% höhere Lösungsmittelumlaufmenge und eine um 4,35% höhere Kühlleistung erforderlich ist.

## Patentansprüche

1. Verfahren zum Entsäuern eines Kohlenwasserstoff-Fluidstroms, der CO₂ und/oder weitere saure Gasen als Verunreinigungen enthält, bei dem man den Fluidstrom in einer Absorptions- bzw. Extraktionszone mit einer Absorptionsflüssigkeit in innigen Kontakt bringt, den weitgehend gereinigten Fluidstrom und die mit CO₂ und/oder weiteren sauren Gasen beladene Absorptionsflüssigkeit voneinander trennt, die Absorptionsflüssigkeit anschließend regeneriert und dann erneut der Absorptions- bzw. Extraktionszone zuführt, **dadurch gekennzeichnet, daß** man zum Regenerieren der Absorptionsflüssigkeit
(a) die beladene Absorptionsflüssigkeit in einer ersten Niederdruckentspannungsstufe auf einen Druck von 1 bis 2 bar (abs) entspannt,
(b) die in der ersten Niedruckentspannungsstufe teilregenerierte Absorptionsflüssigkeit erwärmt und
(c) die teilregenerierte Absorptionsflüssigkeit in einer zweiten Niederdruckentspannungsstufe erneut auf einen Druck von 1 bis 2 bar (abs) entspannt.

2. Verfahren gemäß Anspruch 1, **dadurch gekennzeichnet, daß** man die Absorptionsflüssigkeit in der ersten und zweiten Niederdruckentspannungsstufe auf einen Druck von 1,1 bis 1,5 bar (abs) entspannt.

3. Verfahren gemäß einem der Ansprüche 1 oder 2, **dadurch gekennzeichnet, daß** man die Schritte (b) und (c) in einem wärmetauscher mit Entgasung durchführt.

4. Verfahren gemäß einem der Ansprüche 1 bis 3, **dadurch gekennzeichnet, daß** man die in der ersten und zweiten Entspannungsstufe freigesetzten Gase über separate Kondensatoren abzieht.

5. Verfahren gemäß einem der Ansprüche 1 bis 3, **dadurch gekennzeichnet, daß** man die in der ersten und zweiten Entspannungsstufe freigesetzten Gase über einen gemeinsamen Kondensator abzieht.

6. Verfahren gemäß Anspruch 3, **dadurch gekennzeichnet, daß** man die in dem Wärmetauscher freigesetzten Gase in die erste Entspannungsstufe zurückführt.

7. Verfahren gemäß einem der Ansprüche 1 bis 6, **dadurch gekennzeichnet, daß** man die Absorptionsflüssigkeit vor der ersten Niederdruckentspannungsstufe in wenigstens einer Mitteldrukkentspannungsstufe auf einen Druck von mindestens 3 bar entspannt.

8. Verfahren gemäß einem der Ansprüche 1 bis 7, **dadurch gekennzeichnet, daß** man die Absorptionsflüssigkeit nach dem Entspannen durch Strippen mit Stickstoff oder Wasserdampf regeneriert.

9. Verfahren gemäß einem der Ansprüche 1 bis 8, **dadurch gekennzeichnet**, das man als Absorptionsflüssigkeit eine wässrige Aminlösung verwendet.

10. Verfahren gemäß Anspruch 9, **dadurch gekennzeichnet, daß** man eine Absorptionsflüssigkeit verwendet, die Methyldiethanolamin oder Dimethylethanolamin oder ein Gemisch davon enthält.

11. Verfahren gemäß Anspruch 10, **dadurch gekennzeichnet, daß** man eine Absorptionsflüssigkeit verwendet, die zusätzlich Piperazin enthält.

12. Verfahren nach Anspruch 11, **dadurch gekennzeichnet, dass** die Absorptionsflüssigkeit 30 bis 70 Gew.-% Methyldiethanolamin und Piperazin in einer Menge enthält, dass das Gewichtsverhältnis von Methyldiethanolamin zu Piperazin im Bereich von 9 bis 15 liegt.

13. Verfahren nach Anspruch 12, **dadurch gekennzeichnet, dass** die Absorptionsflüssigkeit 35 bis 60 Gew.-% Methyldiethanolamin enthält.

14. Verfahren nach Anspruch 11, **dadurch gekennzeichnet, dass** die Absorptionsflüssigkeit 45 bis 55 Gew.-% Methyldiethanolamin und Piperazin in einer Menge enthält, dass das Gewichtsverhältnis von Methyldiethanolamin und Piperazin im Bereich von 11 bis 15 liegt.

15. Verfahren nach Anspruch 12, **dadurch gekennzeichnet, dass** die Absorptionsflüssigkeit 35 bis 60 Gew.-% Methyldiethanolamin sowie 3 bis 4 Gew.-% Piperazin enthält.

## Claims

1. A process for deacidifying a fluid hydrocarbon stream which comprises CO₂ and/or other acid gases as impurities, in which the fluid stream is brought into intimate contact with an absorption liquid in an absorption or extraction zone, the substantially purified fluid stream and the absorption liquid loaded with CO₂ and/or other acid gases are separated from one another, and the absorption liquid is subsequently regenerated and then again fed to the absorption or extraction zone, **characterized in that**, in order to regenerate the absorption liquid, said process comprises the steps of,
(a) expanding the loaded absorption liquid in a first low-pressure expansion stage to a pressure of from 1 to 2 bar (absolute),
(b) heating the partially regenerated absorption liquid in the first low-pressure expansion stage and
(c) again expanding the partially regenerated absorption liquid in a second low-pressure expansion stage to a pressure of from 1 to 2 bar (absolute).

2. A process as claimed in claim 1, wherein the absorption liquid is expanded in the first and second low-pressure expansion stages to a pressure of from 1.1 to 1.5 bar (absolute).

3. A process as claimed in either claim 1 or 2, wherein the steps (b) and (c) are carried out in a degassing-equipped heat exchanger.

4. A process as claimed in one of claims 1 to 3, wherein the gases released in the first and second expansion stages are taken off via separate condensers.

5. A process as claimed in one of claims 1 to 3, wherein the gases released in the first and second expansion stages are taken off via a shared condenser.

6. A process as claimed in claim 3, wherein the gases released in the heat exchanger are fed back to the first expansion stage.

7. A process as claimed in one of claims 1 to 6, wherein the absorption liquid is expanded to a pressure of at least 3 bar in at least one medium-pressure expansion stage upstream of the first low-pressure expansion stage.

8. A process as claimed in one of claims 1 to 7, wherein the absorption liquid, after the expansion, is regenerated by stripping with nitrogen or steam.

9. A process as claimed in one of claims 1 to 8, wherein the absorption liquid used is an aqueous amine solution.

10. A process as claimed in claim 9, wherein an absorption liquid is used which comprises methyldiethanolamine or dimethylethanolamine or a mixture thereof.

11. A process as claimed in claim 10, wherein an absorption liquid is used which additionally comprises piperazine.

12. A process as claimed in claim 11, wherein the absorption liquid comprises from 30 to 70% by weight of methyldiethanolamine and piperazine in an amount such that the weight ratio of methyldiethanolamine to piperazine is from 9 to 15.

13. A process as claimed in claim 12, wherein the absorption liquid comprises from 35 to 60% by weight of methyldiethanolamine.

14. A process as claimed in claim 11, wherein the absorption liquid comprises from 45 to 55% by weight of methyldiethanolamine and piperazine in an amount such that the weight ratio of methyldiethanolamine and piperazine is from 11 to 15.

15. A process as claimed in claim 12, wherein the absorption liquid comprises from 35 to 60% by weight of methyldiethanolamine and from 3 to 4% by weight of piperazine.

## Revendications

1. Procédé de désacidification d'un courant fluidique d'hydrocarbures qui contient CO₂ et/ou d'autres gaz acides comme impuretés, dans lequel on met en contact intime le courant fluidique avec un liquide d'absorption dans une zone d'absorption, respectivement d'extraction, on sépare l'un de l'autre le courant fluidique considérablement purifié et le liquide d'absorption chargé du CO₂ et/ou des autres gaz acides, on régénère ensuite le liquide d'absorption puis on amène de nouveau à la zone d'absorption et/ou d'extraction, **caractérisé en ce que**, pour régénérer le liquide d'absorption
(a) l'on détend le liquide d'absorption dans une première étape de détente en pression inférieure à une pression de 1 à 2 bars (abs),
(b) l'on chauffe le liquide d' absorption partiellement régénéré dans la première étape de détente en pression inférieure, et
(c) l'on détend le liquide d'absorption partiellement régénéré dans une deuxième étape de détente en pression inférieure de nouveau à une pression de 1 à 2 bars (abs).

2. Procédé selon la revendication 1, **caractérisé en ce que** l'on détend le liquide d'absorption dans les première et deuxième étapes de détente en pression inférieure à une pression de 1,1 à 1,5 bar (abs).

3. Procédé selon l'une quelconque des revendications 1 ou 2, **caractérisé en ce que** l'on réalise les démarches (b) et (c) dans un échangeur de chaleur avec un dégazage.

4. Procédé selon l'une quelconque des revendications 1 à 3, **caractérisé en ce que** l'on retire les gaz libérés dans les première et deuxième étapes de détente au moyen de condensateurs séparés.

5. Procédé selon l'une quelconque des revendications 1 à 3, **caractérisé en ce que** l'on retire les gaz libérés dans les première et deuxième étapes de détente au moyen d'un condensateur commun.

6. Procédé selon la revendication 3, **caractérisé en ce que** l'on reconduit les gaz libérés dans l'échangeur de chaleur dans la première étape de détente.

7. Procédé selon l'une quelconque des revendications 1 à 6, **caractérisé en ce que** l'on détend le liquide d'absorption avant la première étape de détente en pression inférieure en au moins une étape de détente en pression moyenne à une pression d'au moins 3 bars.

8. Procédé selon l'une quelconque des revendications 1 à 7, **caractérisé en ce que** l'on régénère le liquide d'absorption après la détente par stripping avec de l'azote ou de la vapeur d'eau.

9. Procédé selon l'une quelconque des revendications 1 à 8, **caractérisé en ce que** l'on utilise comme liquide d'absorption une solution aminée.

10. Procédé selon la revendication 9, **caractérisé en ce que** l'on utilise un liquide d'absorption qui contient de la méthyldiéthanolamine ou de la diméthyléthanolamine ou un mélange de celles-ci.

11. Procédé selon la revendication 10, **caractérisé en ce que** l'on utilise un liquide d'absorption qui contient en plus de la pipérazine.

12. Procédé selon la revendication 11, **caractérisé en ce que** le liquide d'absorption contient de 30 à 70 % en poids de méthyldiéthanolamine dans une quantité telle que le rapport de poids de méthyldiéthanolamine par rapport à la pipérazine se situe dans un domaine de 9 à 15.

13. Procédé selon la revendication 12, **caractérisé en ce que** le liquide d'absorption contient 35 à 60 % en poids de méthyldiéthanolamine.

14. Procédé selon la revendication 11, **caractérisé en ce que** le liquide d'absorption contient 45 à 55 % en poids de méthyldiéthanolamine et de la pipérazine dans une quantité telle que le rapport de poids de méthyldiéthanolamine et de pipérazine se situe dans un domaine de 11 à 15.

15. Procédé selon la revendication 12, **caractérisé en ce que** le liquide d'absorption contient 35 à 60 % en poids de méthyldiéthanolamine ainsi que 3 à 4 % en poids de pipérazine.
